# EUROPÄISCHE PATENTSCHRIFT

(11) **EP 3 377 294 B1**
(45) Veröffentlichungstag und Bekanntmachung des Hinweises auf die Patenterteilung: **18.09.2019**
(21) Anmeldenummer: 16806116.6
(22) Anmeldetag: 06.12.2016
(51) Int. Cl.: B29C 45/17, B29C 45/26, B29C 45/44, B29D 23/00

(54) **SPRITZGIESSVORRICHTUNG ZUR HERSTELLUNG VON ROHREN MIT INNENGEWINDE SOWIE VERFAHREN ZUR HERSTELLUNG SOLCHER ROHRE**
INJECTION MOULDING APPARATUS FOR MANUFACTURING OF PIPES WITH INNER THREADS AND METHOD OF MANUFACTURING SUCH PIPES
DISPOSITIF DE MOULAGE PAR INJECTION POUR LA FABRICATION DES TUYAUX AVEC UN FILETAGE INTÉRIEUR ET PROCÉDÉ DE PRODUCTION DESDITS TUYAUX

(30) Priorität: 15.12.2015 DE 102015225247
(43) Veröffentlichungstag der Anmeldung: 26.09.2018
(73) Patentinhaber: Kautex Textron GmbH & Co. KG, 53229 Bonn (DE)
(72) Erfinder: WOLF, Hartmut, 53639 Königswinter (DE)
(74) Vertreter: Richly & Ritschel Patentanwälte PartG mbB
(86) Internationale Anmeldenummer: PCT/EP2016/079931
(87) Internationale Veröffentlichungsnummer: WO 2017/102457

(56) Entgegenhaltungen:
- EP-A1- 0 501 091
- WO-A1-01/70480
- DE-A1-102008 023 473
- ES-A6- 2 021 998
- JP-A- H 058 286
- JP-A- H04 341 834
- JP-A- 2012 171 258
- US-A- 3 966 385
- MICHAELI W ET AL: "HERSTELLUNG MEDIENFUEHRENDER LEITUNGEN DURCH GIT", KUNSTSTOFFE, CARL HANSER VERLAG, MUNCHEN, DE, Bd. 88, Nr. 1, 1. Januar 1998 (1998-01-01) , Seiten 34-36,39, XP000729798, ISSN: 0023-5563

## Beschreibung

Die Erfindung betrifft eine Spritzgießvorrichtung zur Herstellung von Rohren mit hinterschnittener Innengeometrie, vorzugsweise mit Innengewinde. Die Erfindung betrifft weiterhin ein Verfahren zur Herstellung von Rohren mit Innengewinde durch Spritzgießen einer thermoplastischen Formmasse mittels einer Spritzgießvorrichtung, vorzugsweise mit der vorstehend genannten Spritzgießvorrichtung.

Im Stand der Technik sind diverse Verfahren bekannt, um Rohre aus thermoplastischem Kunststoff herzustellen. Solche Rohre können beispielsweise durch Saugblasformen oder Spritzgießen hergestellt werden. Rohre, die in verschiedenen Raumachsen gekrümmt sind, sogenannte 3-D-Rohre, werden häufig durch Saugblasformen hergestellt. Dabei wird ein schlauchförmiger Vorformling extrudiert und in ein entsprechendes Blasformwerkzeug eingezogen. Auch sind Extrusionsverfahren bekannt, bei welchen schlauchförmige Vorformlinge in ein geöffnetes Werkzeug eingelegt werde, wobei das Ausformen des Vorformlings innerhalb des Werkzeugs durch Anwendung von Differenzdruck erfolgt, wobei das Werkzeug die Außenkontur des Rohres abformt.

Für die Herstellung von Wellrohren oder Rippenrohren, die sich im Wesentlichen geradlinig erstrecken, sind Spitzgießverfahren unter Verwendung von Spritzgießwerkzeugen mit umlaufenden Formtunneln bekannt.

Darüber hinaus ist es bekannt, Rohre durch Spritzgießen mittels der sogenannten Projektilinjektionstechnik zu fertigen. Bei diesem Verfahren wird ein auf einem Injektor platziertes Projektil durch die Artikelkavität des gefüllten Werkzeugs getrieben, wobei die schmelzeflüssige Seele des thermoplastischen Kunststoffs in eine Nebenkavität verdrängt wird, die nach der Polymervorfüllung über hydraulisch betätigte Schieber freigegeben wird. So hergestellte Rohre haben einen definierten Innendurchmesser und lassen sich mit einem solchen definierten konstanten Innendurchmesser verhältnismäßig reproduzierbar herstellen.

Insbesondere die Herstellung von Rohren zum Einbau in Kraftfahrzeugen als Lüftungsrohre für Klimaanlagen oder als Einfüllrohre für Kraftstoffbehälter, Wischwasserbehälter oder Harnstoffbehälter oder Rohre als Teile der Verbrennungsluftzufuhr bei Brennkraftmaschinen für Kraftfahrzeuge werden durch die vorstehend beschriebenen Verfahren hergestellt. Solche Rohre sind mit aufgeweiteten Anschlussmuffen, Gewindestutzen und Verzweigungen zu versehen, die bedingt durch die zuvor beschrieben Herstellungsverfahren verhältnismäßig schwierig anzuformen sind. Beispielsweise haben spritzgegossene Rohre, die mit der Wasserinjektionstechnik oder der Projektilinjektionstechnik hergestellt wurden, keine integrierten Gewinde, insbesondere keine Innengewinde und keine definierten Seitenanschlüsse mit großem Anschlussquerschnitt für weitere Funktionsteile. Bedingt durch die Werkzeugteilung ist es auch verhältnismäßig schwierig, an den Anschlussenden der Rohre entsprechende Dichtgeometrien vorzusehen.

Bei extrusionsblasgeformten Rohren ist es deshalb bekannt, die Enden beim Herstellungsvorgang der Rohre zu kalibrieren. Üblicherweise werden Dichtgeometrien und Gewinde durch metallene Gewindeaufsätze oder durch angeschweißte Spritzgussbauteile realisiert. Um seitlich Komponenten an die Rohre anzuschließen, werden üblicherweise diese Komponenten im Bereich von ausgekreisten Öffnungen angeschweißt.

Die Herstellung derartiger Rohre mit Verzweigungen, Gewindeabschnitten und Muffenabschnitten oder Steckenden ist deshalb verhältnismäßig aufwändig. Insbesondere die Herstellung von Innengewinden kann im Stand der Technik nur durch Anspritzen separat hergestellter Komponenten bewerkstelligt werden. Aus der DE 10 2008 023473 A1 ist ein Verfahren zur Herstellung eines Rohres mittels eines PIT-Verfahrens bekannt. Aus der DE 19754006 A1 geht ein GIT-Verfahren hervor, in dem ein Rohr mit Innengewinde erzeugt wird.

Der Erfindung liegt daher die Aufgabe zugrunde, eine eingangs erwähnte Spritzgießvorrichtung zur Herstellung von Rohren mit hinterschnittener Innengeometrie, vorzugsweise mit Innengewinde bereitzustellen.

Der Erfindung liegt weiterhin die Aufgabe zugrunde, ein Verfahren zur Herstellung von Rohren mit hinterschnittener Innengeometrie, vorzugsweise mit Innengewinde durch Spitzgießen einer thermoplastischen Formmasse bereitzustellen.

Die Aufgabe wird gelöst mit den Merkmalen des Anspruchs 1. Vorteilhafte Ausgestaltungen der Erfindung ergeben sich aus den Unteransprüchen.

Die Aufgabe wird weiterhin gelöst durch ein Verfahren mit den Merkmalen des nebengeordneten Verfahrensanspruchs. Das Verfahren wird vorzugsweise unter Verwendung der Spritzgießvorrichtung gemäß der Erfindung durchgeführt.

Ein Gesichtspunkt der Erfindung betrifft eine Spritzgießvorrichtung zur Herstellung von Rohren mit hinterschnittener Innengeomietrie, vorzugsweise mit Innengewinde, mit einem eine Artikelkavität bildenden Werkzeug, mit Mitteln zum Füllen der Artikelkavität mit einer thermoplastischen Formmasse, mit einer Injektionsvorrichtung zur Injektion eines Fluids gegen ein durch die Artikelkavität zu treibendes Projektil, wobei die Injektionsvorrichtung einen Projektilträger mit wenigstens einer Injektionsdüse und mit wenigstens einer Projektilaufnahme für ein Projektil als Verdrängerkörper für die Formmasse umfasst, wobei der Projektilträger an einem von der Projektilaufnahme abliegenden Ende mit einem gewindetragenden oder profilierten Prägekern versehen ist, der relativ zu dem Projektilträger zwischen einer gewindeformenden ersten Lage und einer entformten zweiten Lage verstellbar ist, wobei der Prägekern in der gewindeformenden Lage in die Artikelkavität eintaucht und diese abdichtet.

Der Prägekern kann beispielsweise konisch ausgebildet sein und translatorisch relativ zu dem Projektilträger verstellbar sein, so dass mit diesem durch eine Verstellbewegung in der Längsachse des Projektilträgers ein hinterschnittenes Profil im Inneren des Rohres erzeugbar ist.

Erfindungsgemäß umfasst die Injektionsvorrichtung einen Projektilträger, der an einem von der Projektilaufnahme abliegenden Ende mit einem gewindetragenden Drehkern als Prägekern im Sinne der Erfindung versehen ist. In einer gewindeformenden ersten Lage des Projektilträgers, in der dieser sich innerhalb der Artikelkavität erstreckt, bildet der gewindetragende Drehkern mit dem Werkzeug in der Artikelkavität einen Ringraum, der, wenn er mit einer Formmasse gefüllt wird, ein Innengewinde des Rohres abformt. Der gewindetragende Drehkern kann beispielsweise auf seiner Außenfläche mit einer entsprechenden Verrippung versehen sein, die einen oder mehrere durchgehende Gewindegänge formt.

Das Ziehen des Drehkrns bzw. das Entformen des Drehkerns erfolgt zweckmäßigerweise dadurch, dass dem Drehkern mit einem entsprechenden Mechanismus eine Rotationsbewegung aufgegeben wird. Der Drehkern ist vorzugsweise sowohl drehbeweglich als auch in Richtung der Längserstreckung der Artikelkavität translatorisch verstellbar.

Auf diese Art und Weise lässt sich mit dem Drehkern ein Innengewinde des als Rohr herzustellenden Artikels herstellen, welches im Wesentlichen störungsfrei, das heißt ohne Formtrennnähte oder dergleichen ausgebildet ist. Der Prägekern kann sowohl zylindrisch als auch konisch ausgebildet sein.

Die Spitzgießvorrichtung gemäß der Erfindung umfasst zweckmäßigerweise eine Nebenkavität, die die von dem Projektil verdrängte Formmasse aufnimmt.

Als Werkzeug im Sinne der vorliegenden Patentanmeldung werden diejenigen Teile der Spritzgießvorrichtung bezeichnet, die die Artikelkavität bilden. Das Werkzeug im Sinne der Erfindung kann weitere bewegliche Formteile wie Schieber, bewegliche Formkerne und dergleichen aufweisen. Die Artikelkavität des Werkzeugs steht zweckmäßigerweise in Verbindung mit einer Nebenkavität, die die von dem Projektil verdrängte Formmasse aufnimmt.

Die Injektionsvorrichtung gemäß der Erfindung ist zur Injektion eines unter Hochdruck stehenden Fluids, beispielsweise zur Injektion von Wasser in die Artikelkavität ausgebildet, wobei der Projektilträger der Injektionsvorrichtung mit einem oder mehreren Fluidkanälen durchsetzt sein kann und an seinem zur Aufnahme des Projektils ausgebildeten Ende eine Injektionsdüse ausbildet. Auf diese Art und Weise kann mittels des Fluids das Projektil durch die Artikelkavität getrieben werden. Dabei wird die schmelzeflüssige Seele der von der Artikelkavität aufgenommenen Formmasse in die Nebenkavität verdrängt. Die Nebenkavität kann mittels hydraulisch betätigbarer Schieber zunächst von der Artikelkavität getrennt sein. Nach einer teilweisen oder vollständigen Füllung der Artikelkavität mit der Formmasse kann mittels der Schieber die Nebenkavität freigegeben werden, so dass die mit dem Projektil verdrängte Formmasse in die Nebenkavität eintreten kann.

Als thermoplastische Formmasse im Sinne der Erfindung kann jedes beliebige thermoplastische Polymer vorgesehen sein. Beispielsweise kann als thermoplastische Formmasse ein thermoplastischer Kunststoff vorgesehen sein, der ausgewählt ist aus einer Gruppe umfassend Polyethylen hoher Dichte, Polyamid, Polyamid 6, Polyamid 12, Polyurethan, Polykarbonat, Acrylnitril-Butadien-Styrol-Copolymerisat, Polyketone, Polystyrol, thermoplastische Elastomere auf Olefinbasis, vernetzte thermoplastische Elastomere auf Olefinbasis, thermoplastische Elastomere auf Urethanbasis, thermoplastische Polyesterelastomere und thermoplastische Copolymere.

Die Spritzgießvorrichtung gemäß der Erfindung kann wenigstens einen Anguss umfassen, der in die Artikelkavität mündet.

Bei einer bevorzugten Variante der Spritzgießvorrichtung kann vorgesehen sein, dass der Projektilträger als mehrteiliger erster Formkern mit einem gewindefreien Schaft und mit einer Aufnahme für den Prägekern ausgebildet ist. Der Projektilträger bildet vorzugsweise selbst einen Formkern aus, der mit dem Werkzeug in einem Teil der Artikelkavität einen Ringraum zur Ausformung eines kalibrierten Abschnitts des Rohres bildet.

Als Aufnahme für den Prägekern kann beispielsweise ein Schaftabschnitt des Projektilträgers vorgesehen sein, auf welchem der Prägekern axial verstellbar angeordnet ist.

Der Prägekern kann mittels eines hierfür vorgesehenen Spindeltriebs zwischen der ersten und zweiten Lage verstellbar sein.

Zweckmäßigerweise weist der gewindefreie Schaft des Projektilträgers einen Außendurchmesser auf, der dem Innendurchmesser des als Artikel auszuformenden Rohres etwa entspricht.

An seinem führenden Ende ist der Projektilträger zweckmäßigerweise mit einer Projektilaufnahme für das Projektil versehen, wobei die Projektilaufnahme beispielsweise als Durchmesserstufe des Schafts des Projektilträgers ausgebildet sein kann, welche so bemessen ist, dass das Projektil gegen einen umlaufenden Absatz des Schafts so anliegt, dass dessen Mantelfläche bündig mit dem gewindefreien Schaft des Projektilträgers abschließt.

Der Prägekern kann beispielsweise einen Außendurchmesser haben, der größer ist als der gewindefreie Abschnitt des Schafts, so dass mit diesem ein muffenförmig aufgeweiteter Abschnitt des Rohres formbar ist.

Bei einer bevorzugten und zweckmäßigen Variante der Spritzgießvorrichtung gemäß der Erfindung ist vorgesehen, dass die Aufnahme für den Prägekern als Führungsspindel für den Prägekern ausgebildet ist, der einen dazu komplementären Spindeltrieb aufweist.

Eine zweckmäßige Variante der Spritzgießvorrichtung gemäß der Erfindung zeichnet sich durch wenigstens einen zweiten Formkern aus, der in einer ersten Stellung in die Artikelkavität eintaucht und gegen den gewindefreien Schaft des Projektilträgers anliegt, um mit dem gewindefreien Schaft des Projektilträgers eine Verzweigung des als Artikel auszuformenden Rohres zu bilden.

Alternativ kann vorgesehen sein, dass der zweite Formkern in eine Vertiefung in dem glattwandigen Schaft des Projektilträgers eingreift, um mit dem Projektilträger eine Verzweigung des als Artikel auszufolgenden Rohres zu bilden.

Erfindungsgemäß können weitere Formkerne vorgesehen sein, mit der weitere Abgänge oder Verzweigungen des Rohres herstellbar sind.

Die Erfindung betrifft weiterhin ein Verfahren zur Herstellung von Rohren mit einer hinterschnittenen Innengeometrie, vorzugsweise mit Innengewinde, durch Spritzgießen einer thermoplastischen Formmasse mittels einer Spitzgießvorrichtung mit einem Werkzeug mit einer Artikelkavität, die im Wesentlichen die äußere Kontur eines als Artikel herzustellenden Rohres definiert, unter Verwendung einer Injektionsvorrichtung, die dazu ausgebildet ist, ein Projektil durch die mit einer thermoplastischen Formmasse gefüllte Artikelkavität unter Verdrängung einer flüssigen Seele der Formmasse zu treiben und unter Verwendung eines Projektilträgers, der als Formkern mit einem eine Kontur prägenden oder einem gewindeformenden Teil versehen ist, wobei das Verfahren folgende Verfahrensschritte umfasst:
a) Bestücken des Projektilträgers mit einem Projektil,
b) Schließen des Werkzeuges um den Projektilträger oder Einführen des Projektilträgers in das geschlossene Werkzeug, so dass der Projektilträger die Artikelkavität abdichtet,
c) wenigstens teilweises Füllen der Artikelkavität mit einer plastifizierten Formmasse, wobei in einem Teil der Artikelkavität ein rohrförmiger Abschnitt mit einer hinterschnittenen Geometrie oder ein Innengewindeabschnitt geformt wird,
d) Einleiten eines unter Druck stehenden Fluids in die Artikelkavität mittels der Injektionsvorrichtung, so dass das Fluid das Projektil unter Verdrängung eines Teils der Formmasse durch die Artikelkavität treibt derart, dass das Projektil einen als Hohlkörper ausgebildeten rohrförmigen Artikel formt,
e) Entformen des die Kontur prägenden oder gewindeformenden Teils des Projektilträgers und
f) Öffnen des Werkzeugs und Entnehmen des Artikels.

Vorzugsweise werden die Verfahrensschritte a) bis e) in der Reihenfolge ihrer Aufzählung durchgeführt. Die Schritte e) und f) können gleichzeitig oder in umgekehrter Reihenfolge durchgeführt werden. Erfindungsgemäß ist vorgesehen, dass der Projektilträger während des Füllens der plastifizierten Formmasse in die Artikelkavität eintaucht.

Erfindungsgemäß wird als gewindeformender Teil des Projektilträgers ein Prägekern verwendet, der als Drehkern ausgebildet ist und der mit einer Drehbewegung entfernt wird.

Bei einer vorteilhaften Variante des Verfahrens gemäß der Erfindung ist vorgesehen, dass der Innengewindeabschnitt muffenartig aufgeweitet ist.

Bei einer anderen vorteilhaften Variante des Verfahrens gemäß der Erfindung ist vorgesehen, dass der rohrförmige Artikel unter Verwendung eines zweiten Formkerns mit einer rohrförmigen Abzweigung hergestellt wird, wobei der zweite Formkern in einer ersten ausgefahrenen Stellung gegen einen gewindefreien Schaft des Projektilträgers zur Anlage gebracht wird. Hierzu kann beispielsweise der zweite Formkern eine konkave Stirnfläche aufweisen, die dichtend gegen eine Mantelfläche des glattwandigen Schafts des Projektilträgers zur Anlage gebracht wird.

Alternativ kann in der Mantelfläche des glattwandigen Schafts eine Vertiefung zur Aufnahme einer Stirnfläche des zweiten Formkerns vorgesehen sein, in welche der zweite Formkern in der ersten ausgefahrenen Stellung eingreift.

Zweckmäßigerweise wird der zweite Formkern nach dem Verfahrensschritt b) in die ausgefahrene Stellung verbracht und vor dem Verfahrensschritt e) oder zeitgleich mit dem Verfahrensschritt e) wieder entformt, d.h. in eine zurückgezogene Stellung verbracht.

Zweckmäßigerweise wird mit dem Verfahren gemäß der Erfindung als rohrförmiger Artikel ein Einfüllrohr eines Fluidbehälters für ein Kraftfahrzeug mit einem mit Innengewinde versehenen muffenartig aufgeweiteten Abschnitt hergestellt.

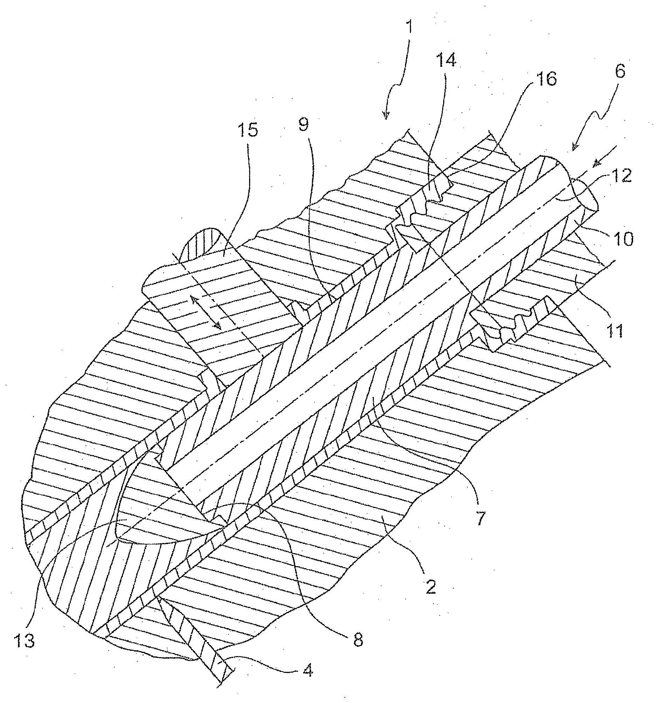

Die Erfindung wird nachstehend anhand eines in der Zeichnungsfigur dargestellten Ausführungsbeispiels erläutert. Die Figur zeigt eine schematische Teilschnittansicht einer Spitzgießvorrichtung 1 gemäß der Erfindung. Eine oder mehrere Vorrichtungen zum Extrudieren der thermoplastischen Formmasse sind aus Vereinfachungsgründen nicht dargestellt. Die Spitzgießvorrichtung 1 umfasst ein Werkzeug, welches beispielsweise aus zwei Formhälften besteht, die eine Artikelkavität 3 definieren. Die Artikelkavität 3 kann beispielsweise als Negativ eines mehrfach im Raum gekrümmten Rohres (3-D-Rohr) ausgebildet sein. Das Werkzeug kann mehrere bewegliche Bauteile in Form von Schiebern oder dergleichen sowie wenigstens eine Nebenkavität umfassen. Die Nebenkavität ist mittels Schiebern gegenüber der Artikelkavität 3 absperrbar. Diese Einzelheiten sind in der Figur aus Vereinfachungsgründen ebenfalls nicht dargestellt.

Die Figur zeigt ein Ende der Artikelkavität 3 im Bereich eines Endes des beispielsweise als Artikel auszuformenden Rohres. Das Werkzeug 2 umfasst einen Anguss 4, der in die Artikelkavität 3 mündet. Weiterhin ist an dem Werkzeug 2 eine Injektionsvorrichtung 6 mit einem Projektilträger 7 angeordnet. Der Projektilträger 7 ist als mehrteiliger Formkern ausgebildet. Dieser umfasst eine Projektilaufnahme 8, die das führende Ende des Projektilträgers 7 bildet, einen sich an die Projektilaufnahme 8 anschließenden glattwandigen Schaft 9 und eine Aufnahme 10 für einen Prägekern 11, der als Drehkern ausgebildet ist. Der Prägekern 11 weist eine gewindeformende bzw. gewindeprägende Außenkontur auf. Diese Außenkontur kann einen oder mehrere durchgängige oder unterbrochene Gewindestege aufweisen, die, wie später noch erläutert werden wird, ein Innengewinde des zu fertigenden Artikels bzw. des zu fertigenden Rohres herstellen.

Der Projektilträger 7 umfasst weiterhin einen Fluidkanal 12, der sich von einer Basis des Projektilträgers 7 hin zu der Projektilaufnahme 8 erstreckt. Über den Fluidkanal 12 ist ein unter Druck stehendes Fluid, beispielsweise Wasser, durch den Projektilträger 7 hindurch gegen ein auf die Projektilaufnahme 8 aufgestecktes Projektil 13 treibbar. Vermittels des Drucks des über die Injektionsvorrichtung 6 zugeführten Fluids wird das Projektil 13 durch die Artikelkavität 3 hindurch getrieben. Die Projektilaufnahme 8 ist als Durchmesserstufe an dem führenden Ende des Projektilträgers 7 ausgebildet. Das Projektil 13 besitzt einen Innendurchmesser, der dem Durchmesser der Durchmesserstufe entspricht. Das Projektil 13 schließt bündig mit dem Außendurchmesser des glattwandigen Schafts 9 ab. Der Außendurchmesser des glattwandigen Schafts 9 entspricht dem Innendurchmesser des zu fertigenden Rohres. Der zwischen dem glattwandigen Schaft 9 und dem Werkzeug 2 gebildete Ringraum 14 ist, wie nachstehend noch beschrieben wird, mit der thermoplastischen Formmasse füllbar, so dass in diesem Bereich der rohrförmige Artikel ein kalibriertes Rohrende mit einem durch den Durchmesser des glattwandigen Schafts 9 vorgegebenen Innendurchmesser bildet.

Mit dem Bezugszeichen 15 ist ein zweiter Formkern bezeichnet, der relativ zur Längsachse des Projektilträgers 7 quer verstellbar in dem Werkzeug 2 gelagert ist. In der in der Figur gezeigten Stellung des zweiten Formkerns 15 liegt dieser dicht gegen den glattwandigen Schaft 9 des Projektilträgers 7 an. Das Werkzeug 2 ist in diesem Bereich so ausgebildet, dass mittels des zweiten Formkerns 15 ein stutzenartiger Abgang bzw. eine stutzenartige Verzweigung des zu formenden Artikels ausgebildet werden kann. Die Stirnfläche des zweiten Formkerns 15 besitzt eine zu der Mantelfläche des glattwandigen Schaftes 9 komplementäre Ausgestaltung.

Bei dem Verfahren gemäß der Erfindung wird beispielsweise zunächst das Werkzeug um den mit dem Projektil 13 bestückten Projektilträger 7 geschlossen. Der zweite Formkern 15 wird gegen den glattwandigen Schaft 9 des Projektilträgers 7 zur Anlage gebracht.

Der Prägekern 11 befindet sich, wie dies auch in der Figur dargestellt ist, in einer gewindeformenden ersten Lage, in welcher der Prägekern 11 die Artikelkavität 3 abdichtet. Der Prägekern 11 gemäß Ausführungsbeispiel hat einen größeren Durchmesser als der Durchmesser des glattwandigen Schafts 9. Die Artikelkavität 3 ist in dem Bereich, in dem der Prägekern 11 in die Artikelkavität 3 hervorsteht, ebenfalls mit einem vergrößerten Durchmesser ausgebildet, so dass in dem Bereich ein Endabschnitt des Rohres mit einem muffenartig aufgeweiteten Querschnitt entsteht.

Über den Anguss 4 wird dann die Artikelkavität 3 teilweise oder vollständig mit einer Formmasse eines thermoplastischen Kunststoffs gefüllt. Im Bereich des Ringraums 14 entsteht zu diesem Zeitpunkt bereits ein rohrförmiger Artikel mit einem Innengewindeabschnitt.

Nach dem Füllen der Artikelkavität 3 wird ein Fluid unter Druck durch den Projektilträger 7 injziert. Dieses Fluid treibt das Projektil 13 durch die Artikelkavität 3. Dabei verdrängt das Projektil 13 eine schmelzeflüssige Seele des in die Artikelkavität 3 gefüllten plastifizierten thermoplastischen Kunststoffs.

Der größte Durchmesser des Projektils 13 entspricht dem Außendurchmesser des glattwandigen Schafts 9, so dass das Projektil 13 eine stehenbleibende Rohrwand erzeugt, deren Wandstärke der Wandstärke der Rohrwand im Bereich des Ringraums 14 entspricht.

Der Prägekern 11 besitzt eine umlaufende Dichtschulter 16, mit der dieser die Artikelkavität 3 bzw. den Ringraum 14 abdichtet. Die Dichtschulter erzeugt eine glattwandige Dichtfläche des zu fertigenden Artikels bzw Rohres.

Nachdem das Projektil 13 durch die Artikelkavität 3 getrieben wurde, wird der zweite Formkern 15 in eine zurückgezogene Stellung verbracht, sodann wird der Prägekern 11 von der in der Figur gezeigten gewindeformenden ersten Lage in eine zweite Lage verbracht, in der dieser die Artikelkavität 3 bzw. den Ringraum 14 freigibt. Diese Lage ist in der Figur nicht gezeigt.

Danach kann der Artikel aus dem Werkzeug 2 entnommen werden.

### Bezugszeichenliste:

- 1: Spritzgießvorrichtung
- 2: Werkzeug
- 3: Artikelkavität
- 4: Anguss
- 5: nicht vergeben
- 6: Injektionsvorrichtung
- 7: Projektilträger
- 8: Projektilaufnahme
- 9: glattwandiger Schaft
- 10: Aufnahme für den Prägekern
- 11: Prägekern
- 12: Fluidkanal
- 13: Projektil
- 14: Ringraum
- 15: zweiter Formkern
- 16: Dichtschulter

## Patentansprüche

1. Spritzgießvorrichtung (1) zur Herstellung von Rohren mit Innengewinde, mit einem eine Artikelkavität (3) bildenden Werkzeug (2), mit Mitteln zum Füllen der Artikelkavität (3) mit einer thermoplastischen Formmasse, mit einer Injektionsvorrichtung (6) zur Injektion eines Fluids gegen ein durch die Artikelkavität (3) zu treibendes Projektil (13), wobei die Injektionsvorrichtung (6) einen Projektilträger (7) mit wenigstens einer Injektionsdüse und mit wenigstens einer Projektilaufnahme für ein Projektil als Verdrängerkörper für die Formmasse umfasst, wobei der Projektilträger (7) an einem von der Projektilaufnahme abliegenden Ende mit einem gewindetragenden Prägekern (11) versehen ist, der relativ zu dem Projektilträger (7) zwischen einer gewindeformenden ersten Lage und einer entformten zweiten Lage verstellbar ist, wobei der Prägekern (11) in der ersten Lage in die Artikelkavität (3) eintaucht und diese abdichtet,
wobei der Prägekern (11) als Drehkern ausgebildet ist.

2. Spritzgießvorrichtung (1) nach Anspruch 1, **dadurch gekennzeichnet, dass** der Projektilträger (7) als mehrteiliger erster Formkern mit einem glattwandigen Schaft (9) und mit einer Aufnahme für den Prägekern (10) ausgebildet ist.

3. Spritzgießvorrichtung (1) nach einem der Ansprüche 1 bis 2, **dadurch gekennzeichnet, dass** der glattwandige Schaft (9) des Projektilträgers (7) einen Außendurchmesser aufweist, der dem Innendurchmesser des als Artikel auszuformenden Rohres etwa entspricht.

4. Spritzgießvorrichtung (1) nach einem der Ansprüche 1 bis 3, **dadurch gekennzeichnet, dass** die Aufnahme für den Prägekern (11) als Führungsspindel für den Prägekern (11) ausgebildet ist, der einen dazu komplementären Spindeltrieb aufweist.

5. Spritzgießvorrichtung (1) nach einem der Ansprüche 1 bis 4, **gekennzeichnet durch** wenigstens einen zweiten Formkern der in einer ersten Stellung in die Artikelkavität (3) eintaucht und gegen den glattwandigen Schaft (9) des Projektilträgers (7) anliegt, um mit dem glattwandigen Schaft (9) des Projektilträgers (7) eine Verzweigung des als Artikel auszuformenden Rohres zu bilden.

6. Spritzgießvorrichtung (1) nach einem der Ansprüche 1 bis 4, **dadurch gekennzeichnet, dass** ein zweiter Formkern in einer ersten Stellung in die Artikelkavität (3) eintaucht und in eine Vertiefung in dem glattwandigen Schaft (9) des Projektilträgers (7) eingreift, um mit dem Projektilträger (7) eine Verzweigung des als Artikel auszuformenden Rohres zu bilden.

7. Verfahren zur Herstellung von Rohren mit Innengewinde durch Spritzgießen einer thermoplastischen Formmasse mittels einer Spritzgießvorrichtung (1) mit einem Werkzeug (2) mit einer Artikelkavität(3), die im Wesentlichen die äußere Kontur eines als Artikel herzustellenden Rohres definiert, unter Verwendung einer Injektionsvorrichtung (6), die dazu ausgebildet ist, ein Projektil (13) durch die mit einer thermoplastischen Formmasse gefüllte Artikelkavität (3) unter Verdrängung einer flüssigen Seele der Formmasse zu treiben und unter Verwendung eines Projektilträgers (7), der als Formkern mit einem gewindeformenden Teil versehen ist, wobei das Verfahren folgende Verfahrensschritte umfasst:
a) Bestücken des Projektilträgers (7) mit einem Projektil (13),
b) Schließen des Werkzeugs (2) um den Projektilträger (7) oder Einführen des Projektilträgers (7) in das geschlossene Werkzeug (2), sodass der Projektilträger (7) die Artikelkavität (3) abdichtet,
c) wenigstens teilweises Füllen der Artikelkavität (3) mit einer plastifizierten Formmasse, wobei in einem Teil der Artikelkavität (3) ein Innengewinde Abschnitt geformt wird,
d) Einleiten eines unter Druck stehenden Fluids in die Artikelkavität (3) mittels der Injektionsvorrichtung (6), sodass das Fluid das Projektil (13) unter Verdrängung eines Teils der Formmasse durch die Artikelkavität (3) treibt, derart, dass das Projektil (13) einen als Hohlkörper ausgebildeten rohrförmigen Artikel formt,
e) Entformen des die Kontur gewindeformenden Teils des Projektilträgers (7) und
f) Öffnen des Werkzeugs (2) und Entnehmen des Artikels,
**dadurch gekennzeichnet, dass**
als gewindeformender Teil des Projektilträgers (7) ein Prägekern (11) verwendet wird, der mit einer Drehbewegung entfernt wird und,
dass der Prägekern in Schritt e) relativ zu dem Projektilträger (7) zwischen einer gewindeformenden ersten Lage und einer entformten zweiten Lage verstellt wird.

8. Verfahren nach Anspruch 7, **dadurch gekennzeichnet, dass** der Innengewindeabschnitt muffenartig aufgeweitet ist.

9. Verfahren nach einem der Ansprüche 7 bis 8, **dadurch gekennzeichnet, dass** der rohrförmige Artikel unter Verwendung eines zweiten Formkerns mit einer rohrförmigen Abzweigung hergestellt wird, wobei der zweite Formkern in einer ersten ausgefahrenen Stellung gegen einen glattwandigen Schaft (9) des Projektilträgers (7) zur Anlage gebracht wird oder in eine Vertiefung in dem glattwandigen Schaft (9) des Projektilträgers (7) eingreift.

10. Verfahren nach Anspruch 9, **dadurch gekennzeichnet, dass** der zweite Formkern nach dem Verfahrensschritt b) und vor dem Verfahrensschritt c) in die erste ausgefahrene Stellung verbracht wird und vor dem Verfahrensschritt f) eingefahren wird.

11. Verfahren nach einem der Ansprüche 7 bis 10, **dadurch gekennzeichnet, dass** als rohrförmigen Artikel ein Einfüllrohr eines Fluidbehälters für ein Kraftfahrzeug mit einem mit Innengewinde versehenen muffenartig aufgeweiteten Abschnitt hergestellt wird.

## Claims

1. An injection molding device (1) for manufacturing tubes having an internal thread, having a tool (2) that forms an article cavity (3), having means for filling the article cavity (3) with a thermoplastic molding compound, having an injection device (6) for injecting a fluid toward a projectile (13) to be driven through the article cavity (3), wherein the injection device (6) comprises a projectile carrier (7) having at least one injection nozzle and having at least one projectile receptacle for a projectile as a displacement member for the molding compound, wherein the projectile carrier (7) at an end that is remote from the projectile receptacle is provided with a thread-bearing stamping core (11) which is adjustable relative to the projectile carrier (7) between a first position that forms a thread, and a demolded second position, wherein the stamping core (11) in the first position plunges into the article cavity (3) and seals the latter,
wherein
the stamping core (11) is configured as a rotary core.

2. The injection molding device (1) as claimed in claim 1, **characterized in that** the projectile carrier (7) is configured as a multiple-part first mold core having a smooth-walled shank (9) and having a receptacle for the stamping core (10).

3. The injection molding device (1) as claimed in one of claims 1 and 2, **characterized in that** the smooth-walled shank (9) of the projectile carrier (7) has an external diameter which approximately corresponds to the internal diameter of the tube to be molded as the article.

4. The injection molding device (1) as claimed in one of claims 1 to 3, **characterized in that** the receptacle for the stamping core (11) is configured as a guide spindle for the stamping core (11), the former having a spindle drive that is complementary thereto.

5. The injection molding device (1) as claimed in one of claims 1 to 4, **characterized by** at least one second mold core which in a first position plunges into the article cavity (3) and bears on the smooth-walled shank (9) of the projectile carrier (7) so as to by way of the smooth-walled shank (9) of the projectile carrier (7) form a branch of the tube to be molded as the article.

6. The injection molding device (1) as claimed in one of claims 1 to 4, **characterized in that** a second mold core in a first position plunges into the article cavity (3) and engages in a depression in the smooth-walled shank (9) of the projectile carrier (7) so as to by way of the projectile carrier (7) form a branch of the tube to be molded as the article.

7. A method for manufacturing tubes having an internal thread, by injection molding a thermoplastic molding compound by means of an injection molding device (1) having a tool (2) having an article cavity (3) which substantially defines the external contour of a tube to be manufactured as the article, while using an injection device (6) which is configured to drive a projectile (13) through the article cavity (3) that is filled with a thermoplastic molding compound while displacing a liquid core of the molding compound, and while using a projectile carrier (7) which as a mold core is provided with a part that forms a thread, wherein the method comprises the following method steps:
a) equipping the projectile carrier (7) with a projectile (13);
b) closing the tool (2) around the projectile carrier (7), or introducing the projectile carrier (7) into the closed tool (2) such that the projectile carrier (7) seals the article cavity (3);
c) at least partially filling the article cavity (3) with a plasticized molding compound, wherein an internal thread portion is formed in part of the article cavity (3);
d) directing a pressurized fluid into the article cavity (3) by means of the injection device (6) such that the fluid drives the projectile (13) through the article cavity (3) while displacing part of the molding compound in such a manner that the projectile (3) forms a tubular article that is configured as a hollow body;
e) demolding the part of the projectile carrier (7) that forms the contour the thread; and
f) opening the tool (2) and retrieving the article,
**characterized in that**
a stamping core (11) which is removed by way of a rotating movement is used as the thread-forming part of the projectile carrier (7), and **in that** the stamping core in step e) is adjusted relative to the projectile carrier (7) between a thread-forming first position and a demolded second position.

8. The method as claimed in claim 7, **characterized in that** the internal thread portion is widened in the manner of a sleeve.

9. The method as claimed in one of claims 7 and 8, **characterized in that** the tubular article is manufactured while using a second mold core having a tubular branch, wherein the second mold core in a first deployed position is brought to bear on a smooth-walled shank (9) of the projectile carrier (7) or engages in a depression in the smooth-walled shank (9) of the projectile carrier (7).

10. The method as claimed in claim 9, **characterized in that** the second mold core after method step b) and before method step c) is moved to the first deployed position and is retracted before method step f).

11. The method as claimed in one of claims 7 to 10, **characterized in that** a filling tube of a fluid container for a motor vehicle, having a portion which is widened in the manner of a sleeve and provided with an internal thread, is manufactured as the tubular article.

## Revendications

1. Dispositif de moulage par injection (1) pour la fabrication de tuyaux dotés d'un filetage intérieur, comprenant un outil (2) formant une cavité d'article (3), des moyens permettant de remplir la cavité d'article (3) avec une matière à mouler thermoplastique, un dispositif d'injection (6) servant à l'injection d'un fluide contre un projectile (13) à entraîner à travers la cavité d'article (3), dans lequel le dispositif d'injection (6) comporte un support de projectile (7) doté d'au moins une buse d'injection et d'au moins un logement de projectile pour un projectile faisant office de corps de refoulement pour la matière à mouler, dans lequel le support de projectile (7) est doté d'un noyau de matriçage fileté (11) à une extrémité éloignée du logement de projectile, lequel noyau de matriçage est déplaçable par rapport au support de projectile (7) entre une première position de formation de filetage et une deuxième position démoulée, dans lequel le noyau de matriçage (11) pénètre dans la cavité d'article (3) et ferme hermétiquement celle-ci dans la première position, dans lequel le noyau de matriçage (11) est réalisé sous forme de noyau rotatif.

2. Dispositif de moulage par injection (1) selon la revendication 1, **caractérisé en ce que** le support de projectile (7) est réalisé sous forme de premier noyau de moule en plusieurs parties comprenant une tige (9) à paroi lisse et un logement pour le noyau de matriçage (10) .

3. Dispositif de moulage par injection (1) selon la revendication 1 ou 2, **caractérisé en ce que** la tige (9) à paroi lisse du support de projectile (7) présente un diamètre extérieur qui correspond approximativement au diamètre intérieur du tuyau à démouler en tant qu'article.

4. Dispositif de moulage par injection (1) selon l'une des revendications 1 à 3, **caractérisé en ce que** le logement pour le noyau de matriçage (11) est réalisé sous forme de broche de guidage pour le noyau de matriçage (11), lequel comprend au moins un entraînement de broche complémentaire à celle-ci.

5. Dispositif de moulage par injection (1) selon l'une des revendications 1 à 4, **caractérisé par** au moins un deuxième noyau de moule qui, dans une première position, pénètre dans la cavité d'article (3) et s'appuie contre la tige (9) à paroi lisse du support de projectile (7), afin de former, avec la tige (9) à paroi lisse du support de projectile (7), une ramification du tuyau à démouler en tant qu'article.

6. Dispositif de moulage par injection (1) selon l'une des revendications 1 à 4, **caractérisé en ce qu'**un deuxième noyau de moule pénètre dans la cavité d'article (3) dans une première position et vient en prise dans un évidement dans la tige (9) à paroi lisse du support de projectile (7), afin de former, avec le support de projectile (7), une ramification du tuyau à démouler en tant qu'article.

7. Procédé de fabrication de tuyaux dotés d'un filetage intérieur par moulage par injection d'une matière à mouler thermoplastique au moyen d'un dispositif de moulage par injection (1) comprenant un outil (2) doté d'une cavité d'article (3) qui définit sensiblement le contour extérieur d'un tuyau à fabriquer en tant qu'article, en utilisant un dispositif d'injection (6) qui est conçu pour entraîner un projectile (13) à travers la cavité d'article (3) remplie d'une matière à mouler thermoplastique en refoulant une âme liquide de la matière à mouler et en utilisant un support de projectile (7) qui est doté d'une partie de formation de filetage en tant que noyau de moule, le procédé comprenant les étapes suivantes consistant à :
a) munir le support de projectile (7) d'un projectile (13),
b) fermer l'outil (2) autour du support de projectile (7) ou introduire le support de projectile (7) dans l'outil fermé (2), de telle sorte que le support de projectile (7) ferme hermétiquement la cavité d'article (3),
c) remplir au moins partiellement la cavité d'article (3) avec une matière à mouler plastifiée, dans lequel une partie à filetage intérieur est formée dans une partie de la cavité d'article (3),
d) introduire un fluide sous pression dans la cavité d'article (3) au moyen du dispositif d'injection (6), de telle sorte que le fluide entraîne le projectile (13) en refoulant une partie de la matière à mouler à travers la cavité d'article (3), de telle sorte que le projectile (13) forme un article tubulaire réalisé sous forme de corps creux,
e) démouler la partie du support de projectile (7) formant le filetage de contour et
f) ouvrir l'outil (2) et retirer l'article, **caractérisé en ce**
**qu'**un noyau de matriçage (11) est utilisé en tant que partie de formation de filetage du support de projectile (7), lequel noyau est retiré par un mouvement de rotation et
en ce que le noyau de matriçage est, à l'étape e), déplacé par rapport au support de projectile (7) entre une première position de formation de filetage et une deuxième position démoulée.

8. Procédé selon la revendication 7, **caractérisé en ce que** la partie à filetage intérieur est élargie en forme de manchon.

9. Procédé selon la revendication 7 ou 8, **caractérisé en ce que** l'article tubulaire est fabriqué de manière à présenter une bifurcation tubulaire en utilisant un deuxième noyau de moule, le deuxième noyau de moule étant amené en appui contre une tige (9) à paroi lisse du support de projectile (7) dans une première position sortie ou venant en prise dans un évidement dans la tige (9) à paroi lisse du support de projectile (7).

10. Procédé selon la revendication 9, **caractérisé en ce que** le deuxième noyau de moule est amené à la première position sortie après l'étape de procédé b) et avant l'étape de procédé c) et est rentré avant l'étape de procédé f).

11. Procédé selon l'une des revendications 7 à 10, **caractérisé en ce qu'**un tuyau de remplissage d'un récipient de fluide pour un véhicule automobile est fabriqué de manière à présenter une partie élargie en forme de manchon dotée d'un filetage intérieur en tant qu'article tubulaire.
